# EUROPÄISCHE PATENTSCHRIFT

(11) **EP 3 609 832 B1**
(45) Veröffentlichungstag und Bekanntmachung des Hinweises auf die Patenterteilung: **07.04.2021**
(21) Anmeldenummer: 18718750.5
(22) Anmeldetag: 10.04.2018
(51) Int. Cl.: B66F 7/28, F16C 19/50, F16C 19/30

(54) **SCHWENKVERRIEGELUNGSVORRICHTUNG SOWIE HEBEVORRICHTUNG MIT EINER SCHWENKVERRIEGELUNGSVORRICHTUNG**
PIVOT LOCKING DEVICE AND LIFTING DEVICE HAVING A PIVOT LOCKING DEVICE
DISPOSITIF DE VERROUILLAGE PAR PIVOTEMENT AINSI QUE DISPOSITIF DE LEVAGE COMPRENANT UN DISPOSITIF DE VERROUILLAGE PAR PIVOTEMENT

(30) Priorität: 13.04.2017 DE 102017108064
(43) Veröffentlichungstag der Anmeldung: 19.02.2020
(73) Patentinhaber: Finkbeiner, Gerhard, 72250 Freudenstadt (DE)
(72) Erfinder: BENZ, Dieter, 72275 Alpirsbach (DE)
(74) Vertreter: Mammel und Maser
(86) Internationale Anmeldenummer: PCT/EP2018/059086
(87) Internationale Veröffentlichungsnummer: WO 2018/189137

(56) Entgegenhaltungen:
- DE-A1-102007 020 041

## Beschreibung

Die Erfindung betrifft eine Schwenkverriegelungsvorrichtung sowie eine Hebevorrichtung mit einem auf und ab bewegbaren Träger und zumindest einem an dem Träger schwenkbar gelagerten Tragarm mit einer Schwenkverriegelungsvorrichtung für den Tragarm.

Aus der EP 0 478 035 B1 ist eine Arretierungsvorrichtung für einen Trag-arm einer Kraftfahrzeughebebühne bekannt. Diese Fahrzeughebevorrichtung umfasst mindestens eine Säule, entlang der ein Träger auf und ab bewegbar ist. Am Träger sind zwei schwenkbar gelagerte Tragarme vorgesehen. Zur Einstellung einer Winkelposition der Tragarme zueinander beziehungsweise des Tragarms zum Träger ist eine Arretiervorrichtung vorgesehen. Diese Arretiervorrichtung besteht aus zwei zusammenwirkenden Verzahnungselementen, die koaxial zur Schwenkachse vorgesehen sind. Durch eine Verfahrbewegung entlang der Schwenkachse von einem Verzahnungselement kommt dieses außer Eingriff zum anderen Verzahnungselement und gibt eine Schwenkbewegung des Tragarms frei. Eine solche Freigabe der Schwenkbewegung wird beim Absenken des Trägers auf den Boden angesteuert. Beim Anheben des Trägers werden die koaxial zur Schwenkachse ausgerichteten Verzahnungselemente wieder aufeinander zubewegt, sodass die Verzahnungselemente ineinander greifen. Dabei kann es zu hohen mechanischen Belastungen zwischen den Verzahnungselementen kommen, sofern diese nicht auf Lücke zueinander ausgerichtet sind. Oftmals ist eine manuelle Unterstützung zur exakten Positionierung des Tragarms zum Träger zur fluchtenden Ausrichtung der Verzahnungselemente erforderlich. Solche Verzahnungselemente unterliegen aufgrund der mechanischen Bearbeitung einem hohen Verschleißmechanismus und sind in der Herstellung kostenintensiv.

Aus der DE 10 2007 020 041 A1, die den Oberbegriff des Anspruchs 1 offenbart, geht des Weiteren eine mechanisch ausgebildete Tragarmarretierung für eine Hebevorrichtung hervor. Auch bei dieser Tragarmarretierung sind ein erstes und zweites Verriegelungselement koaxial zu einer Schwenkachse ausgerichtet, wobei bei einer Absenkbewegung eines Trägers auf den Boden eine axiale Verschiebebewegung von einem der zwei zueinander ausgerichteten Verriegelungselemente über das Lastaufnahmeelement eingeleitet wird. Dadurch wird eine Schwenkbewegung des Tragarms freigegeben. Beim Anheben des Trägers werden die beiden Verriegelungselemente entlang der Schwenkachse wieder aufeinander zubewegt, um zu verriegeln.

Der Erfindung liegt die Aufgabe zugrunde, eine mechanische Schwenkverriegelungsvorrichtung, insbesondere eine Hebevorrichtung zur Tragarmarretierung mit einer Schwenkverriegelungsvorrichtung, vorzuschlagen, welche mechanisch einfach und kostengünstig ausgebildet ist.

Diese Aufgabe wird durch eine Schwenkverriegelungsvorrichtung gelöst, welche zwei zu einer gemeinsamen Schwenkachse ausgerichtete Lagerelemente aufweist, wobei ein oder beide Lagerelemente zur gemeinsamen Schwenkachse schwenkbar sind, wobei ein erstes Lagerelement eine erste Durchbrechung und das zweite Lagerelement eine zweite Durchbrechung aufweist, die fluchtend zueinander ausgerichtet sind und am ersten Lagerelement eine Kammer mit einer Umlaufbahn vorgesehen ist, die zum zweiten Lagerelement offen ist und durch eine zur Kammer weisende Anschlussfläche am zweiten Lagerelement geschlossen ist, wobei in der Kammer eine Vielzahl von Umlaufelementen angeordnet ist und mit einem am zweiten Lagerelement angeordneten Mitnehmer, der in die Kammer eingreift und zwischen Umlaufelementen positioniert ist und bei einer Schwenkbewegung des zweiten Lagerelements die Umlaufelemente in der Kammer verschiebt und mit einem am ersten Lagerelement angeordneten Verriegelungselement, welches in einer Entriegelungsposition die Umlaufbahn der Kammer freigibt und in einer Verriegelungsposition eine Verschiebebewegung der Umlaufelemente entlang der Kammer sperrt.

Eine solche Schwenkverriegelungsanordnung weist den Vorteil auf, dass für eine Freigabe oder eine Sperrung einer Schwenkbewegung des ersten Lagerelements zum zweiten Lagerelement die Aktivierung des Verriegelungselementes erforderlich ist, ohne dass eine Relativbewegung des ersten Lagerelementes zum zweiten Lagerelement entlang der Schwenkachse erforderlich ist. Dadurch kann eine flachbauende Schwenkverriegelungsvorrichtung geschaffen werden, bei welcher das Bauvolumen sowohl bei einer Freigabe als auch einer Sperrung der Schwenkbewegung gleich ist. Zudem ist durch diese Schwenkverriegelungsvorrichtung eine verschleißfreie Ausgestaltung ermöglicht. Des Weiteren ist bevorzugt aufgrund der Umlaufelemente eine feinstufige Verriegelung ermöglicht, sodass eine nahezu stufenlose Arretierung des ersten Lagerelementes in einer Winkelposition zum zweiten Lagerelement ermöglicht ist.

Bevorzugt ist die Kammer kreisförmig oder kreisbogenförmig ausgebildet. Dadurch kann eine einfache Führung der Umlaufelemente innerhalb der Kammer gegeben sein, die vorzugsweise eine Umlaufbahn umfasst.

Des Weiteren weist die Kammer bevorzugt vor und nach dem die Umlaufbahn der Kammer sperrenden Verriegelungselement einen Sperrbereich mit einer Breite auf, sodass die Umlaufelemente einspurig durch den Sperrbereich hindurchgeführt werden, das heißt, dass die Umlaufelemente in einer Reihe hintereinander durch den Bereich vor und nach dem Verriegelungselement verschiebbar geführt sind. Dies ermöglicht die Ausgestaltung eines einfachen Verriegelungsmechanismus, indem beispielsweise das Verriegelungselement ein oder mehrere Umlaufelemente zwangsweise aus dem Sperrbereich der Kammer herausführt, wodurch das Verriegelungselement mit einem Verriegelungsabschnitt in der Umlaufbahn der Umlaufelemente positioniert ist.

Bevorzugt umfasst der Sperrbereich der Kammer vor und nach dem Verriegelungselement wenigstens eine Länge in Umfangsrichtung gesehen von zumindest einem Umlaufelement. Dadurch kann der ebenfalls in der Kammer angeordnete Mitnehmer am zweiten Lagerelement einen größtmöglichen Schwenkbereich durchlaufen.

Eine bevorzugte Ausgestaltung der Schwenkvorrichtung sieht vor, dass die Kammer über den gesamten Umfang eine konstante Breite aufweist, sodass die Umlaufelemente nur einspurig, also in einer Reihe hintereinander, geführt sind. Die Breite der Kammer entspricht also dem Durchmesser von einem Umlaufelement, sodass eine Vielzahl von Umlaufelementen in einer Reihe hintereinander innerhalb der Kammer geführt ist.

Alternativ kann die Schwenkverriegelungsvorrichtung eine Kammer aufweisen, welche dem Sperrbereich gegenüberliegend einen Staubereich umfasst, dessen Breite dem zwei- oder mehrfachen Umfang der Umlaufelemente entspricht. Innerhalb eines solchen Staubereichs können beispielsweise die Umlaufelemente zwei-, drei- oder mehrspurig zueinander angeordnet sein, das heißt, dass mehrere Reihen von hintereinander geführten Umlaufelementen konzentrisch zueinander ausgerichtet sind. Eine solche Anordnung weist den Vorteil auf, dass bei einer Schwenkbewegung eine Reduzierung der Kräfte ermöglicht sein kann.

Des Weiteren ist bevorzugt zwischen dem Staubereich und dem Sperrbereich der Kammer ein Verjüngungsbereich ausgebildet, in welchem die zwei- oder mehrspurig nebeneinander liegenden Umlaufelemente auf eine einspurige Anordnung im Sperrbereich überführbar sind. Der Verjüngungsbereich kann trichterförmig ausgebildet sein, sodass sich die in mehreren Spuren in den Verjüngungsbereich gebildeten Umlaufelemente aufeinanderfolgend ineinander einreihen, sodass diese danach nur in einer Reihe hintereinander liegen. Eine solche zwangsweise Sortierung kann durch eine Drehbewegung des Mitnehmers bei einer Schwenkbewegung des zweiten Lagerelementes zum ersten Lagerelement angesteuert werden.

Zur Ansteuerung einer Verfahrbewegung der Umlaufelemente innerhalb der Kammer ist der Mitnehmer in der Kammer verfahrbar geführt. Vorzugsweise weist der Mitnehmer radial ausgerichtete Führungsflächen auf, welche entlang einer inneren und äußeren Kammerwand geführt sind. Dadurch kann eine gezielte Kraftübertragung bei einer Schwenkbewegung des Lagerelements über eine sich zwischen den beiden Führungsflächen erstreckende Stirnseite des Mitnehmers auf die Umlaufelemente erfolgen.

Vorteilhafterweise weist der Mitnehmer bei einer Kammer mit einem Staubereich eine Verfahrstrecke auf, welcher durch einen Winkelbereich begrenzt ist, entlang dem sich der Staubereich erstreckt. Bevorzugt kann zwischen den beiden Lagerelementen ein Anschlag ausgebildet sein, um diesen Winkelbereich zu begrenzen.

Bei einem Mitnehmer, der in einer Kammer mit einer konstanten Breite über den gesamten Umfang vorgesehen ist, kann dieser eine Verfahrstrecke innerhalb der Kammer aufweisen, welche sich mit Ausnahme auf den Sperrbereich über den gesamten Umfang erstreckt.

Die am ersten Lagerelement vorgesehene Kammer weist bevorzugt eine Tiefe auf, welche der Höhe eines Umlaufelementes entspricht. Durch die Anordnung von nur einer Lage von Umlaufelementen in der Kammer kann eine besonders flachbauende Anordnung geschaffen sein.

Die Umlaufelemente können als Kugeln Rollen, Stifte, Bogensegmente, Körner, Sand oder dergleichen ausgebildet sein. Insbesondere beim Einsatz von Zylinderstiften oder Zylinderrollen sind diese bevorzugt stehend in der Kammer geführt, sodass die Mantelflächen der Zylinderstifte der Zylinderrollen während einer Verfahrbewegung innerhalb der Kammer aneinander anliegen und sich an der Kammerwand abstützen. Die jeweiligen Stirnflächen der Zylinderstifte der Zylinderrollen sind einerseits zum Boden der Kammer und andererseits zur Anschlussfläche des zweiten Lagerelements ausgerichtet. Bevorzugt sind mehreckige oder unrunde Stifte oder Rollen vorgesehen, die stehend geführt sind. Diese weisen einander gegenüberliegende Anlageflächen oder Druckflächen zur Kraftübertragung auf. Auch können diese Stifte oder Rollen zusätzlich oder alternativ zumindest eine Führungsfläche aufweisen, welche entlang einer Kammerwand geführt ist. Alternativ können auch Strahlkugeln eingesetzt werden.

Des Weiteren ist bevorzugt das Verriegelungselement in einer nicht aktiven oder nicht betätigten Position mit einem Kraftspeicherelement in einer Verriegelungsposition angeordnet und greift vorzugsweise in die Kammer im Sperrbereich ein. Dadurch wird die eingestellte Winkelposition nur dann freigegeben, wenn eine aktive Betätigung erfolgt. Beispielsweise beim Einsatz der Schwenkverriegelungsvorrichtung an einer Hebevorrichtung kann somit beim Heben und Senken von einem Fahrzeug der Tragarm in einer verriegelten Position gesichert bleiben.

Des Weiteren ist das Verriegelungselement durch eine Verschiebebewegung, insbesondere durch eine radial zum Verlauf der Kammer im Sperrbereich ausgerichtete Verschiebebewegung, aktivierbar oder das Verriegelungselement ist durch eine Drehbewegung aktivierbar. Sowohl durch die Verschiebebewegung als auch die Drehbewegung kann die flachbauende Anordnung der Schwenkverriegelungsvorrichtung aufrechterhalten bleiben.

Eine weitere vorteilhafte Ausgestaltung der Schwenkverriegelungsvorrichtung sieht vor, dass der Mitnehmer lösbar mit dem zweiten Verriegelungselement gekoppelt ist. Dies weist den Vorteil auf, dass eine einfache Montage und ein Zusammenbau der Schwenkverriegelungsvorrichtung ermöglicht sind. Beispielsweise können in die Kammer des ersten Lagerelementes die Umlaufelemente sowie der Mitnehmer eingesetzt werden, um darauffolgend die Kammer durch das zweite Lagerelement zu schließen, wobei gleichzeitig eine Kopplung des Mitnehmers zum zweiten Lagerelement ermöglicht ist, sodass eine Drehbewegung des zweiten Lagerelementes zum ersten Lagerelement auf den Mitnehmer übertragen werden kann.

Des Weiteren weisen das erste und zweite Lagerelement jeweils einen Flanschabschnitt zur Montage an einem Bauteil auf. Dies ermöglicht einen flexiblen Einsatz in verschiedenen Bereichen. Bevorzugt ist die Schwenkverriegelungsvorrichtung bei Hebevorrichtungen zum Heben und Senken von Lasten, Fahrzeugen oder dergleichen, insbesondere für eine Tragarmarretierung, vorgesehen.

Die der Erfindung zugrunde liegende Aufgabe wird des Weiteren durch eine Hebevorrichtung zum Heben und Senken von Lasten, Fahrzeugen oder dergleichen mit einem auf und ab bewegbaren Träger, an dem zumindest ein Tragarm in einer Schwenkachse an dem Träger schwenkbar gelagert ist, und vorzugsweise ein freies Ende des Tragarms unter die Last, das Fahrzeug oder dergleichen bewegbar ist, gelöst, bei der die Schwenkverriegelungsvorrichtung nach einem der vorbeschriebenen Ausführungsformen zwischen dem Träger und dem Tragarm vorgesehen ist. Dadurch kann der Tragarm durch eine mechanisch einfache Schwenkverriegelungsvorrichtung in verschieden einstellbaren Schwenkpositionen arretierbar sein. Durch die feinstufige Verriegelung kann eine sehr genaue Positionierung des Tragarms zur zu hebenden Last zum Fahrzeug oder dergleichen ermöglicht sein. Zudem ist die Schwenkverriegelungsvorrichtung einfach zu bedienen und verschleißfrei. Auch ist eine schnelle und leichtgängige Schwenkbewegung des Tragarms trotz der Zwischenschaltung der Schwenkverriegelungsvorrichtung zwischen dem Träger und dem Tragarm ermöglicht.

Des Weiteren ist bevorzugt an dem Träger der Hebevorrichtung ein in der Lage veränderbares Bedienelement vorgesehen, durch welches beim Absenken des Trägers auf den Boden oder manuell das Verriegelungselement der Schwenkverriegelungsvorrichtung in eine Entriegelungsposition überführbar ist.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht von zwei Hebevorrichtungen zur Bildung einer Zweisäulen-Hebebühne,
Figur 2 eine schematisch vergrößerte perspektivische Ansicht auf einen Träger mit daran angeordneten Tragarmen der Hebevorrichtung gemäß Figur 1,
Figur 3 eine schematische Schnittansicht entlang des Trägers und des Tragarms mit einer Schwenkverriegelungsvorrichtung in einer verriegelten Position,
Figur 4 eine schematische Schnittansicht entlang des Trägers und des Tragarms mit der Schwenkverriegelungsvorrichtung in einer entriegelten Position,
Figur 5 eine perspektivische Ansicht von oben auf die erfindungsgemäße Schwenkverriegelungsvorrichtung,
Figur 6 eine perspektivische Ansicht von unten auf die Schwenkverriegelungsvorrichtung gemäß Figur 5,
Figur 7 eine schematische Ansicht auf ein erstes Lagerelement der Schwenkverriegelungsvorrichtung gemäß Figur 5 mit einem Verriegelungselement in einer Verriegelungsposition,
Figur 8 eine schematische Ansicht des ersten Lagerelementes gemäß Figur 7 mit einer Verriegelungsvorrichtung in einer entriegelten Position,
Figur 9 eine schematische Ansicht auf eine alternative Ausführungsform des ersten Lagerelementes zu Figur 7 mit einem Verriegelungselement in einer verriegelten Position,
Figur 10 eine schematische Ansicht auf das erste Lagerelement gemäß Figur 9 mit einem Verriegelungselement in einer entriegelten Position,
Figur 11 eine schematische Ansicht auf eine alternative Ausführungsform des ersten Lagerelementes gemäß Figur 7 mit einem Verriegelungselement in einer Verriegelungsposition,
Figur 12 eine schematische Ansicht des ersten Lagerelements gemäß Figur 11 mit einem Verriegelungselement in einer Entriegelungsposition,
Figur 13 eine schematische Ansicht auf eine alternative Ausführungsform des ersten Lagerelementes gemäß Figur 7 mit einem alternativen Verriegelungselement in einer Verriegelungsposition,
Figur 14 eine schematisch vergrößerte Ansicht der Verriegelungsvorrichtung gemäß Figur 13 in einer Entriegelungsposition,
Figur 15 eine schematische Schnittansicht einer alternativen Ausführungsform eines Bedienelementes zur Ansteuerung der Verriegelungsvorrichtung gemäß Figur 7 in einer Entriegelungsposition,
Figur 16 eine schematische Schnittansicht des Bedienelementes gemäß Figur 15 zur Ansteuerung einer Verriegelungsposition des Verriegelungselementes der Schwenkverriegelungsvorrichtung,
Figur 17 eine schematische Ansicht auf eine alternative Ausführungsform des ersten Lagerelementes zu Figur 7 mit einem Verriegelungselement in einer Verriegelungsposition, und
Figur 18 eine perspektivische Ansicht auf ein Umlaufelement.

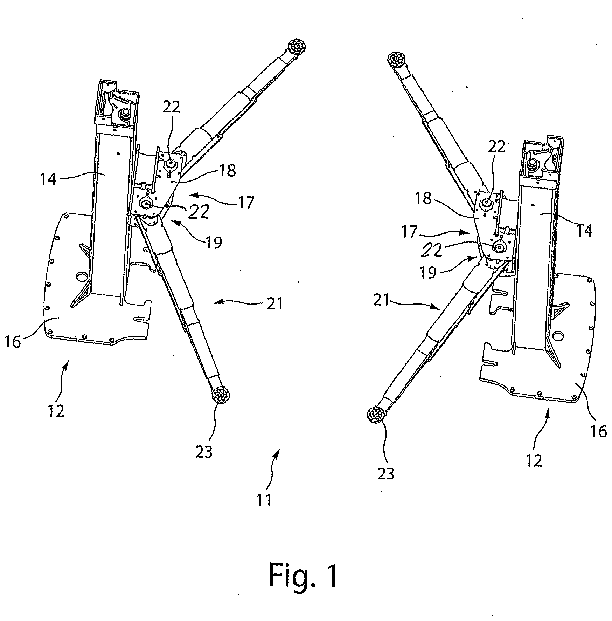

In Figur 1 ist perspektivisch beispielsweise eine Zweisäulen-Hebebühne 11 dargestellt, welche zwei einander zugeordnete Hebevorrichtungen 12 umfasst. Diese Hebevorrichtung 12 umfasst eine Hubsäule 14, welche beispielsweise mit einer Fußplatte 16 fest verbunden ist, welche ortsfest mit einem Untergrund verbunden ist. Ein Träger 17 ist entlang einer Hubachse 15 der Hebevorrichtung 11 auf und ab bewegbar vorgesehen. Der Träger 17 nimmt ein Lastaufnahmemittel 18 auf. Das Lastaufnahmemittel 18 umfasst einen Gehäuseabschnitt 19, der zumindest teilweise geschlossen ist, an dessen jeweiligen äußeren Enden Tragarme 21 um eine vertikale Schwenkachse 22 schwenkbar aufgenommen sind. Diese Tragarme 21 sind teleskopierbar ausgebildet und weisen der Schwenkachse 22 gegenüberliegend Lastaufnahmeelemente 23 beziehungsweise Vorkehrungen auf, um verschiedene Lastaufnahmeelemente 23 austauschbar darauf anzuordnen.

Der Träger 17 nimmt des Weiteren eine Antriebseinrichtung auf. Diese kann elektrohydraulisch, hydraulisch oder mechanisch ausgebildet sein und weist gemäß der dargestellten Ausführungsform ein Hydraulikaggregat auf. Diese Antriebseinrichtung wird von einer Steuerung überwacht und angesteuert. Zur Energieversorgung kann beispielsweise zumindest ein Akkumulator vorgesehen sein. Die Steuerung arbeitet vorteilhafterweise kabellos. Insbesondere kann eine Fernbedienung vorgesehen sein, um die Hebevorrichtungen 12 anzusteuern. Insbesondere kommunizieren auch die beiden einander zugeordneten und gegenüberliegenden Hebevorrichtungen 12 kabellos miteinander, um beispielsweise ein gleichzeitiges Einleiten einer Hebe- und Senkbewegung sowie eine gegenseitige Überwachung eines Gleichlaufes oder dergleichen sicherzustellen. Alternativ können zwischen den zwei Hebevorrichtungen 12 Versorgungsleitungen und/oder Steuerleitungen vorgesehen sein, sodass sowohl Steuersignale als auch eine Stromversorgung kabelgebunden ermöglicht sind.

Die Hebevorrichtung 12 weist gemäß der beispielhaft dargestellten Ausführungsform eine Hubsäule 14 mit einem U-förmigen Querschnitt auf, innerhalb dem der Träger 17 auf und ab bewegbar mittels Führungen geführt ist. Alternativ kann der Träger auch hülsen- oder patronenförmig ausgebildet sein und die Hubsäule umschließen. Bei einer solchen Anordnung ist die Antriebsspindel oder der Hydraulikzylinder zum Heben oder Senken des Trägers innerhalb der Hubsäule angeordnet.

Eine weitere alternative Ausführungsform der Hubvorrichtung 12 kann auch darin liegen, dass anstelle der Hubsäule und dem auf und ab bewegbaren Träger ein Hubstempel einer Stempelbühne vorgesehen ist, wobei am oberen Ende des Hubstempels der Träger angeordnet ist, an welchem der oder die Tragarme vorgesehen sind.

Des Weiteren kann eine alternative Ausführungsform der Hebevorrichtung 11 darin liegen, dass der auf und ab bewegbare Träger 17 mittels einer Halbschere oder einer Doppelschere, die wiederum mit einem Hydraulikzylinder betätigt werden, auf und ab bewegt wird, an welchem der oder die Tragarme angeordnet sein können.

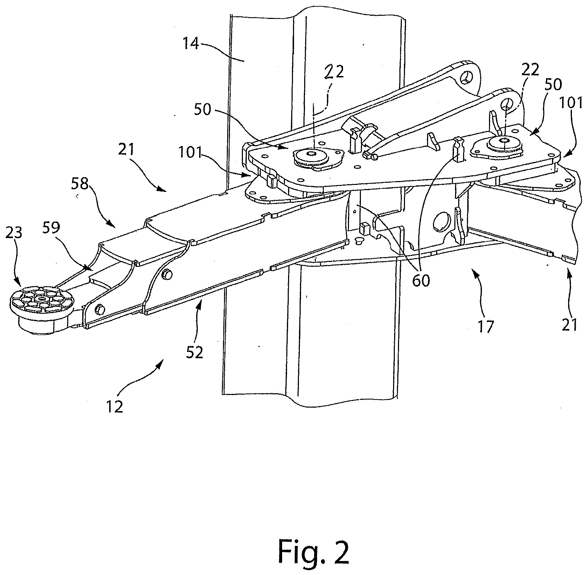

Die Figur 2 zeigt schematisch vergrößert die Anordnung von zwei Tragarmen 21 an einem Träger 17. Der Tragarm 21 ist beispielsweise verlängerbar und umfasst einen Tragarmkörper 52, der darin verschiebbar zumindest ein Tragarmstück 58 aufnimmt. Beispielsweise ist ein erstes Tragarmstück 58 vorgesehen, welches wiederum ein zweites Tragarmstück 59 aufnimmt, an dessen äußeren freien Ende das Lastaufnahmeelement 23 angeordnet ist. An dem Träger 17 ist des Weiteren ein Bedienelement 60 vorgesehen, welches einer Schwenkanordnung 50 zugeordnet ist, durch welches der Tragarm 21 um die Schwenkachse 22 schwenkbar zum Träger 17 aufgenommen ist. Dieses Bedienelement 60 dient zur Ansteuerung einer Schwenkverriegelungsvorrichtung 101. Diese Schwenkverriegelungsvorrichtung 101 ist zwischen dem Tragarm 21 und dem Träger 17 positioniert.

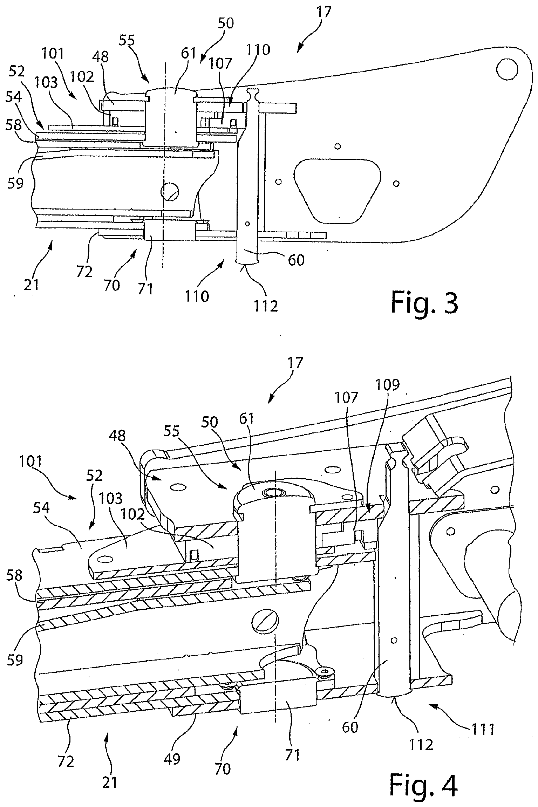

In Figur 3 ist eine schematische Schnittansicht entlang des Tragarms 21 und des Trägers 17 gemäß Figur 2 dargestellt. Die Figur 4 zeigt eine perspektivische Schnittansicht zu Figur 3, wobei das Bedienelement 60 aktiviert ist.

Die Schwenkanordnung 50 besteht aus einem oberen Schwenklager 55 und einem unteren Schwenklager 70. Diese Schwenklager 70 sind zur gemeinsamen Schwenkachse 22 ausgerichtet. Diese Anordnung des oberen Schwenklagers 55 und des unteren Schwenklagers 70 weist den Vorteil auf, dass innerhalb des Tragarmkörpers 52 ein Freiraum geschaffen ist, sodass zumindest ein erstes und/oder zweites Tragarmstück 58, 59 zwischen dem oberen und unteren Schwenklager 55, 70 positionierbar ist. In Bezug auf die Schwenkanordnung 50 sowie die Anordnung und Ausführungsformen als auch die Anbindung des Tragarms 21 zum Träger 17 wird vollumfänglich auf die WO 2014/207217 Bezug genommen.

Zur Arretierung des Tragarms 21 in einer Winkelposition oder Schwenkposition zum Träger 17 ist die Schwenkverriegelungsvorrichtung 101 vorgesehen. Diese ist beispielsweise zwischen einem oberen Trägerabschnitt 48 des Trägers 17 und einer oberen Gehäusewand 54 des Tragarmkörpers 52 vorgesehen. Diese Schwenkverriegelungsvorrichtung 101 ist dem oberen Schwenklager 55 der Schwenkanordnung 50 zugeordnet. Alternativ oder zusätzlich kann die Schwenkverriegelungsvorrichtung 101 dem unteren Schwenklager 70 zugeordnet sein. In diesem Fall ist die Schwenkverriegelungsvorrichtung 101 zwischen einem unteren Trägerabschnitt 49 des Trägers 17 und einer unteren Gehäusewand 72 des Tragarmkörpers 52 positioniert.

Die Schwenkverriegelungsvorrichtung 101 umfasst ein erstes Lagerelement 102 sowie ein zweites Lagerelement 103. Jedes der Lagerelemente 102, 103 weist eine Durchbrechung 104, 106 auf, durch welche sich ein Schwenkbolzen 61 des oberen Schwenklagers 55 erstreckt. Die Schwenkverriegelungsvorrichtung 101 weist des Weiteren ein Verriegelungselement 107 auf, welches das erste und zweite Lagerelement 102, 103 in einer Position zueinander fixiert oder eine relative Schwenkbewegung freigibt. In Figur 3 ist das Verriegelungselement 107 in einer Verriegelungsposition 108 vorgesehen. In dieser Verriegelungsposition 108 ist die Schwenkverriegelungsvorrichtung 101 gesperrt. Der Tragarm 21 ist in seiner ausgerichteten Position zum Träger 17 verdrehgesichert.

In Figur 4 ist das Bedienelement 60 in eine Aktivierungsposition 111 übergeführt. Dies kann durch ein manuelles Anheben des Bedienelementes 60 erfolgen. Alternativ kann der Träger 17 auf einen Boden abgesenkt sein, sodass eine untere Berührfläche 112 des Bedienelements 60 auf dem Boden aufliegt und das Bedienelement 60 in die Aktivierungsposition 111 überführt. Dadurch ist das Verriegelungselement 107 in eine Entriegelungsposition 109 übergeführt. Eine Schwenkbewegung des ersten Lagerelementes 102 zum zweiten Lagerelement 103 ist freigegeben. Der Tragarm 21 ist auf eine gewünschte Position relativ zum Träger 17 um die Schwenkachse 22 schwenkbar.

Das erste Lagerelement 102 weist einen Flanschabschnitt 114 oder einen Befestigungsabschnitt auf, durch welchen die Schwenkverriegelungsvorrichtung 101 an dem Träger 17, insbesondere am oberen Trägerabschnitt 48, befestigbar ist. Das zweite Lagerelement 103 weist ebenfalls einen Flanschabschnitt 115 oder Befestigungsabschnitt auf, sodass ein Tragarm 21, insbesondere eine obere Gehäusewand 54 des Tragarmkörpers 52, daran befestigbar ist. Der Schwenkbolzen 61 erstreckt sich durch die Durchbrechungen 104, 106 des ersten und zweiten Lagerelementes 102, 103 sowie durch die entsprechenden Öffnungen im oberen Trägerabschnitt 48 und der oberen Gehäusewand 54. Dadurch ist die Schwenkverriegelungsvorrichtung 101 koaxial zur Schwenkachse 22 angeordnet und ausgerichtet. Die Lastaufnahme zwischen dem Träger 17 und dem Tragarm 21 erfolgt über den zumindest einen Schwenkbolzen 61, 71.

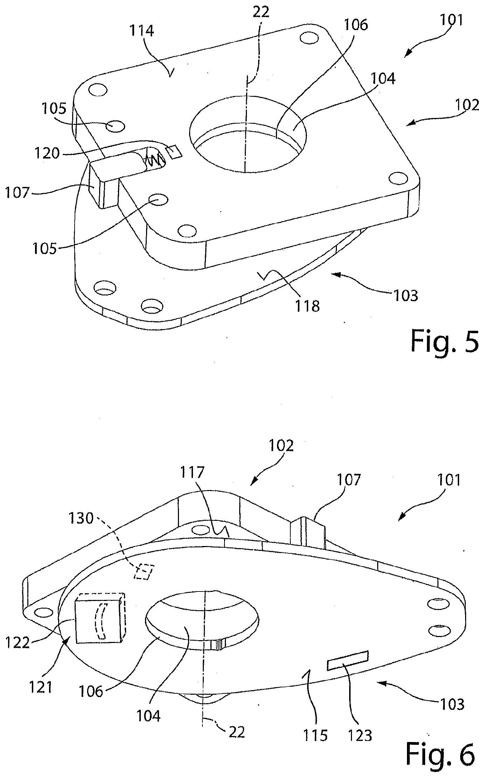

In Figur 5 ist eine perspektivische Ansicht auf die Schwenkverriegelungsvorrichtung 101 dargestellt. Die Figur 6 zeigt eine perspektivische Ansicht von unten.

Das erste und/oder zweite Lagerelement 102, 103 sind bevorzugt plattenförmig ausgebildet. Jeweils an der Außenseite des ersten und zweiten Lagerelements 102, 103 ist der Flanschabschnitt 114, 115 vorgesehen. Beispielsweise kann dies eine ebene Anschlussfläche mit darin enthaltenen Befestigungsbohrungen oder dergleichen sein. Am ersten Lagerelement 102 ist das Verriegelungselement 107 aufgenommen. Dieses ist gemäß einer ersten Ausführungsform verschiebbar am ersten Lagerelement 102 vorgesehen. Das erste und zweite Lagerelement 102, 103 weisen jeweils aufeinander zugerichtete Anschlussflächen 117, 118 auf, welche aufeinander aufliegen und bei einer Schwenkbewegung des ersten Lagerelements 102 relativ zum zweiten Lagerelement 103 um die Schwenkachse 22 aneinander entlang gleiten. Bevorzugt kann eine gleitreibungsreduzierende Oberflächenbeschichtung auf der oder den Anschlussflächen 117, 118 vorgesehen sein. Ebenso kann bevorzugt vorgesehen sein, dass die aneinander liegenden Flächenabschnitte der Anschlussflächen 117, 118 zur Verringerung der Reibung zur Verriegelungsvorrichtung der Reibung reduziert sind.

Das Lagerelement 103 nimmt einen Mitnehmer 121 auf, der fest an dem Lagerelement 102 oder lösbar an dem Lagerelement 102 vorgesehen, insbesondere einsetzbar, ist. Dieser Mitnehmer 121 kann beispielsweise eine drehsichere geometrische Kontur 122 aufweisen, sodass dieser sich selbständig im Lagerelement 103 ausrichtet. Nach dem Einsetzen des Mitnehmers 21 in das Lagerelement 103 ist dieser mit seiner Außenseite bündig zum Flanschabschnitt 115.

Die Lagerelemente 102 und 103 können durch eine Transportsicherung 105 (Figur 5) in einer vorbestimmten Position zueinander zusammengehalten werden, bis das Lagerelement 102 an dem Träger 17 und das Lagerelement 103 an dem Tragarm 21 befestigt ist. Die Transportsicherung 105 kann dahingehend ausgestaltet sein, dass in dem Lagerelement 102 eine Durchgangsbohrung vorgesehen ist und in dem Lagerelement 103 ein Gewinde eingebracht ist, so dass mittels einer Schraube die durch die Durchgangsbohrung im Lagerelement 102 hindurchgesteckt ist, über das Gewinde im Lagerelement 103 die beiden Teile zueinander fixiert sind. Nach der Montage kann diese Transportsicherung 105 in einfacher Weise gelöst und entfernt werden, so dass die Lagerelemente 102 und 103 um die Achse 22 relativ zueinander schwenkbar sind.

Zur Überwachung der Schwenkverriegelungsvorrichtung 101 kann ein Sensor 120 (Figur 5) vorgesehen sein, durch welchen die Position des Verriegelungselementes 107 überwacht wird. Sofern das Verriegelungselement 107 in einer Verriegelungsposition 108 durch den Sensor 120 erkannt wird, kann ein Signal an die Steuerung gegeben werden, dass ein Heben und/oder Senken der Tragarme 21 freigegeben wird.

Des Weiteren kann zwischen dem ersten und zweiten Lagerelement 102, 103 ein weiterer Sensor 130 (Figur 6) vorgesehen sein. Durch diesen Sensor 130 kann eine Drehposition oder Winkelposition zwischen dem Lagerelement 102 und dem Lagerelement 103 erfasst werden. Dadurch kann die Ausrichtung des oder der Tragarme 21 zu einem Arbeitsraum erfasst werden.

An dem Lagerelement 103, insbesondere an einer Unterseite 115 des Lagerelementes 103, kann ein Sensor 123 (Figur 6) vorgesehen sein. Durch diesen Sensor 123 kann eine Belastung erfasst werden, welche beim Anheben einer Last auf den Tragarm 21 wirkt. Dadurch kann beispielsweise ein Überlastschutz gegeben sein, sofern der Versuch unternommen wird, eine zu schwere Last anzuheben. Die Signale der vorgenannten Sensoren 120, 123, 130 können vorteilhafterweise kabellos an die Steuerung der Hebevorrichtung 11 übermittelt werden.

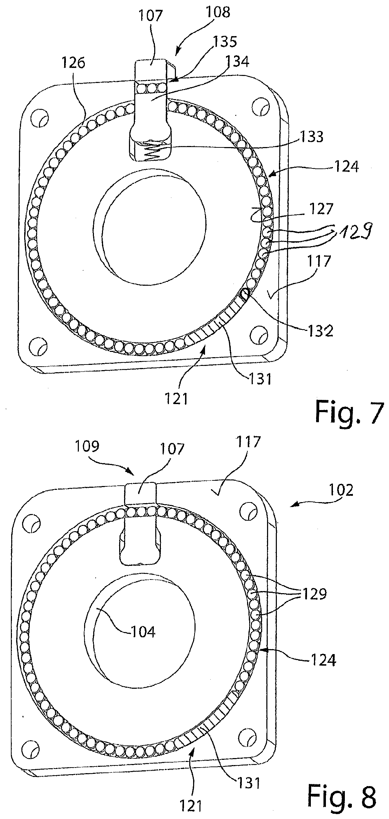

In Figur 7 ist eine Ansicht auf eine Innenseite beziehungsweise die Anschlussfläche 117 des ersten Lagerelements 102 dargestellt. Das zweite Lagerelement 103 ist abgenommen. Das Verriegelungselement 107 ist in einer Verriegelungsposition dargestellt. Figur 8 zeigt eine analoge Ansicht zu Figur 7 mit der Abweichung, dass das Verriegelungselement 107 in einer Entriegelungsposition 109 angeordnet ist.

Das erste Lagerelement 102 umfasst eine umlaufende Kammer 124. Diese Kammer 124 weist eine geschlossene oder durchgehende Umlaufbahn auf. Die Umlaufbahn der Kammer 124 weist einen Boden 125 auf, der gegenüber der Anschlussfläche 117 vertieft ist. Die Kammer 124 weist zwei konzentrisch zueinander ausgerichtete Kammerwände 126, 127 auf. Die Kammer 124 ist über ihren gesamten Umfang mit einer gleichen Breite ausgebildet. In der Kammer 124 ist eine Vielzahl von Umlaufelementen 129 angeordnet. Diese können beispielsweise aus Kugeln bestehen. Im Ausführungsbeispiel sind die Umlaufelemente 129 als Zylinderrollen oder Zylinderstifte ausgebildet. Diese Umlaufelemente 129 sind stehend in der Kammer 124 vorgesehen, sodass die jeweilige Umfangswand der Umlaufelemente 129 sich an der Kammerwand 126, 127 abwälzen. Die Kammer 124 weist eine konstante Breite auf, die auf den Durchmesser der Umlaufelemente 29 angepasst ist. Die Umlaufelemente 129 sind dadurch einspurig in der Kammer 124 angeordnet. Die Umlaufelemente 129 sind also in einer Reihe hintereinander in der Kammer 124 positioniert.

Der Mitnehmer 121 greift in die Kammer 124 ein und kann beispielsweise stegförmig ausgebildet sein. Dieser Steg 131 ist an die Krümmung der Kammer 124 angepasst. Die jeweiligen stirnseitigen Enden des Steges 131 liegen unmittelbar wiederum an einem Umlaufelement 129 an.

Das Verriegelungselement 107 ist durch ein Kraftspeicherelement 133 in der Verriegelungsposition 108 gehalten. In dieser Verriegelungsposition durchquert ein Verriegelungsabschnitt 134 des Verriegelungselements 107 die Umlaufbahn der Umlaufelemente 129 oder die Kammer 124. Dabei werden einzelne Umlaufelemente 129 aus der Kammer 124 herausgeführt und sind in einem Halteabschnitt 135 des Verriegelungselementes 107 gespeichert. Da der Raum innerhalb der Kammer 124 zwischen dem Verriegelungselement 107 und dem Mitnehmer 121 beziehungsweise den in die Kammer 122 eingreifenden Steg 131 des Mitnehmers 31 durch Umlaufelemente 129 vollständig ausgefüllt ist, wird eine Verfahrbewegung des Mitnehmers 121 entlang der Kammer 124 gesperrt. Dadurch ist eine Verriegelung des ersten Lagerelementes 102 zum zweiten Lagerelement 103 gegeben.

Zum Einleiten einer Schwenkbewegung zwischen dem ersten und zweiten Lagerelement 102, 103 wird das Verriegelungselement 107 in die Verriegelungsposition 109 gemäß Figur 8 übergeführt. Dabei gelangen die im Halteabschnitt 135 gespeicherten Umlaufelemente 129 wiederum in die Umlaufbahn der Kammer 124. Diese wird geöffnet, sodass eine Umlaufbewegung der Umlaufelemente 129 ermöglicht ist. Diese Verfahrbewegung der Umlaufelemente 129 wird über den Mitnehmer 21 angesteuert.

Gemäß einer nicht näher dargestellten alternativen Ausführungsform kann vorgesehen sein, dass der Halteabschnitt 135 auch nur ein oder zwei Umlaufelemente 129 speichern kann. In Abhängigkeit der Auswahl und körperlichen Ausgestaltung der Umlaufelemente 192 können auch mehrere Umlaufelemente 129 in dem Halteabschnitt 135 des Verriegelungselementes 107 gespeichert sein.

Bei dieser Ausführungsform wird das Rastermaß von einer ersten zu einer benachbarten Schwenkposition durch den Durchmesser der Umlaufelemente 129 bestimmt.

Bei dieser Ausführungsform kann ein Schwenkbereich des ersten Lagerelements 102 relativ zum zweiten Lagerelement 103 in einem Winkelbereich vorgesehen sein, der um den Bereich des Mitnehmers 21, insbesondere die Länge des Steges 131 und die Länge des Halteabschnitts 135, in Richtung auf die Kammer 124 gesehen reduziert ist.

An dem Mitnehmer 121 bzw. in einem Bereich, in welchem der Mitnehmer 121 mit dem Lagerelement 103 verbunden ist, kann ein weiterer Sensor 132 vorgesehen sein, durch welchen eine auf die Schwenkverriegelungsvorrichtung 101 wirkende Drehmomentbelastung erfasst werden kann. Auch dieser Sensor 132 kann kabellos Signale an die Steuerung übertragen.

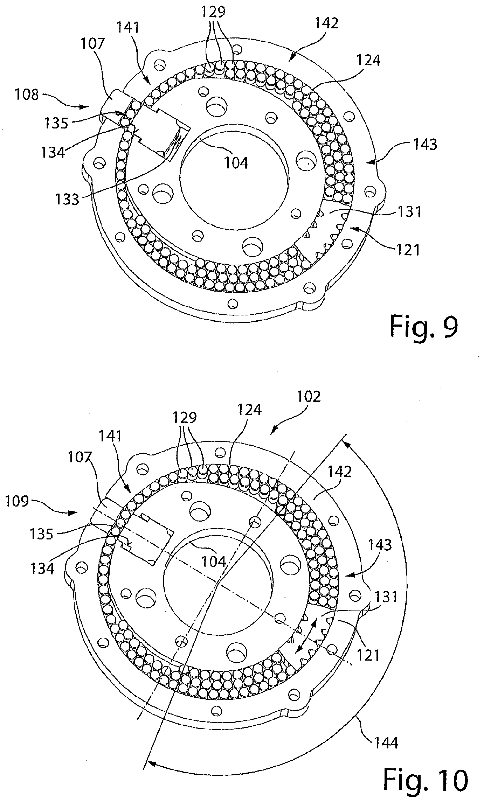

In Figur 9 ist eine alternative Ausführungsform des ersten Lagerelements 102 zu Figur 7 dargestellt. Diese Ausführungsform weicht in der Ausbildung der Kammer 124 von der Ausführungsform in Figur 7 ab.

Die Kammer 124 weist links und rechts zum Verriegelungselement 107 einen Sperrbereich 141 auf, in dem ein, zwei oder mehrere Umlaufelemente 129 einspurig geführt sind. Jeweils daran anschließend ist ein Verjüngungsbereich 142 vorgesehen, der den Sperrbereich 141 mit einem Staubereich 143 verbindet. Der Staubereich 143 liegt vorzugsweise dem Sperrbereich 141 gegenüber. Die Breite der Kammer 124 ist im Staubereich 143 größer als im Sperrbereich 141. Beispielsweise können die Umlaufelemente 129 im Staubereich 143 zwei- oder mehrspurig zueinander angeordnet sein. Es können also zwei oder mehrere konzentrisch zueinander ausgerichtete Reihen von Umlaufelementen 129 in dem Staubereich 143 angeordnet sein. Im Ausführungsbeispiel ist der Staubereich 143 dreispurig ausgebildet. Der Verjüngungsbereich 142 ermöglicht, dass die im Staubereich 143 mehrspurig angeordneten Umlaufelemente 129 in eine einspurige Anordnung im Sperrbereich 141 übergeführt werden.

Bei dieser Ausführungsform gemäß Figur 3 ist der Schwenkbereich des ersten Lagerelements 102 zum zweiten Lagerelement 103 durch den Umfangswinkel 144 des Staubereichs bestimmt.

Innerhalb des Staubereichs 143 sind die innere und äußere Kammer 126, 127 konzentrisch im konstanten Abstand ausgerichtet, sodass eine Führung des Steges 131 gegeben ist. Im Hinblick auf die weitere Funktionsweise, Anordnung und Ausgestaltung wird auf die Figuren 7 und 8 Bezug genommen.

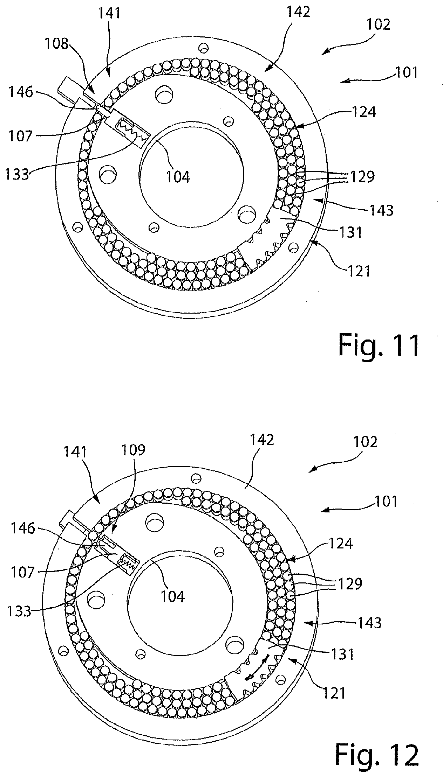

In den Figuren 11 und 12 ist eine alternative Ausführungsform der Schwenkverriegelungsvorrichtung 101 zu den Figuren 9 und 10 dargestellt. Diese Ausführungsform weicht in der Ausgestaltung des Verriegelungselements 107 von der Ausführungsform in den Figuren 9 und 10 ab. Das Verriegelungselement 107 umfasst keinen Halteabschnitt 135. Vielmehr ist ein Dorn 146 vorgesehen, der beim Überführen aus einer Entriegelungsposition 109 des Verriegelungselementes 107 gemäß Figur 12 in eine Verriegelungsposition 108 des Verriegelungselementes 107 gemäß Figur 11 zwischen zwei benachbarten Umlaufelementen 129 eingreift und die Umlaufbahn der Umlaufelemente 129 innerhalb der Kammer 124 stoppt.

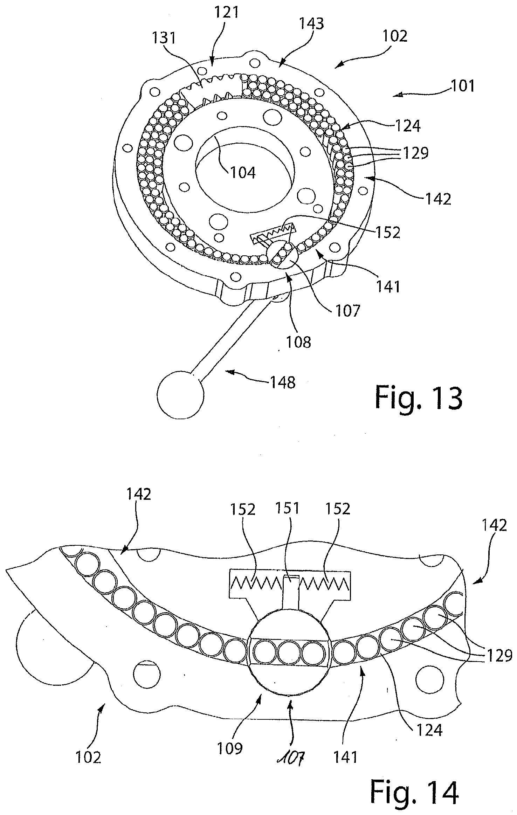

In den Figuren 13 und 14 ist des Weiteren eine alternative Ausführungsform der Schwenkverriegelungsvorrichtung 101 zu den Figuren 9 bis 12 dargestellt. Diese Schwenkverriegelungsvorrichtung 101 zeigt eine weitere alternative Ausgestaltung des Verriegelungselementes 107. Zur Ansteuerung des Verriegelungselementes 107 aus einer Entriegelungsposition 109 gemäß Figur 14 in eine Verriegelungsposition 108 gemäß Figur 13 erfolgt eine Drehbewegung des Verriegelungselements 107. Die im Halteabschnitt 135 des Verriegelungselementes 107 positionierten Umlaufelemente 129 werden aus der Umlaufbahn der Kammer 124 herausgeführt, sodass mit umlaufenden Wandabschnitten des Verriegelungselementes 107 die Umlaufbahn innerhalb der Kammer 124 gesperrt ist. Die Betätigung des Verriegelungselementes 107 kann manuell mittels eines Hebels 148 oder auch über das Bedienelement 60 angesteuert sein. Die Schwenkbewegung des Verriegelungselementes 107 ist durch einen Anschlag 151 in Form eines Stiftes begrenzt. Ein- oder beidseitig des Anschlages 151 ist zumindest ein Rückstellelement 152, insbesondere ein Druckfederelement, vorgesehen. Dieses Rückstellelement 152 ist in der Ausnehmung eingebracht, innerhalb der der Anschlag 151 schwenkbar ist. Dadurch kann keine Rückstellung des Verriegelungselementes 107 in eine Entriegelungsposition 109 selbstständig durchgeführt werden. Im Übrigen gelten die Ausführungen zu den vorstehenden Ausführungsformen.

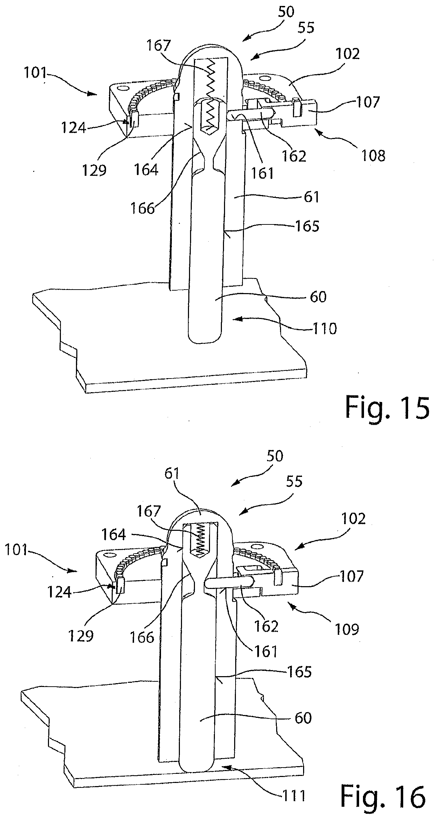

In Figur 15 ist eine schematische Schnittansicht einer alternativen Ansteuerung der Schwenkverriegelungsvorrichtung 101 durch ein Bedienelement 60 dargestellt. Die Figur 15 zeigt die Schwenkverriegelungsvorrichtung 101 nur teilweise mit dem ersten Lagerelement 102 und dem Verriegelungselement 107 in der Verriegelungsposition 108. In Figur 16 ist diese Anordnung in einer Entriegelungsposition 103 dargestellt.

Bei dieser Ausführungsform ist in dem Schwenkbolzen 61, der sich durch die Durchbrechung 104, 106 des ersten und zweiten Lagerelementes 102, 103 erstreckt, das Bedienelement 60 geführt. Über eine Querbohrung 161 in dem Schwenkbolzen 61 ist ein Stift 162 geführt. Ein Ende des Stiftes 162 greift an dem Verriegelungselement 107 an. Das gegenüberliegende Ende des Stiftes 161 ist zum Bedienelement 60 ausgerichtet. Das Bedienelement 60 weist einen ersten und zweiten Führungsabschnitt 164, 165 zur axialen Verfahrbewegung innerhalb des Schwenkbolzen 61 auf. Zwischen dem ersten und zweiten Führungsabschnitt 164, 165 ist ein Steuerelement 166 in Form einer konisch verlaufenden Fläche gegeben, die sich im Querschnitt gegenüber dem ersten und zweiten Führungsabschnitt 164, 165 verjüngt. Mittels eines Kraftspeicherelementes 167 wird das Bedienelement 60 in einer inaktiven Position 110 angeordnet. Der Führungsabschnitt 164 drückt den Stift 161 gegen das Verriegelungselement 107, sodass dieses in der Verriegelungsposition 108 arretiert ist. Beim Absenken der Schwenkverriegelungsvorrichtung 101 - beispielsweise in Richtung Boden - taucht das Bedienelement 60 in den Schwenkbolzen 61 ein und wird in eine Aktivierungsposition 111 übergeführt. Das Verriegelungselement 107 wird durch das Kraftspeicherelement 133 in die Entriegelungsposition 107 übergeführt, da ein Verfahrweg für den Stift 162 aufgrund des Steuerelements 166 freigegeben wird und der Stift 162 in den Schwenkbolzen eintauchen kann. Dies ist in Figur 16 dargestellt. Sobald die Position eingestellt ist und die Schwenkverriegelungsvorrichtung 101 angehoben wird, drückt das Kraftspeicherelement 167 den Bolzen 60 in die inaktive Position 110, und das Verriegelungselement 107 wird in die Verriegelungsposition 108 übergeführt.

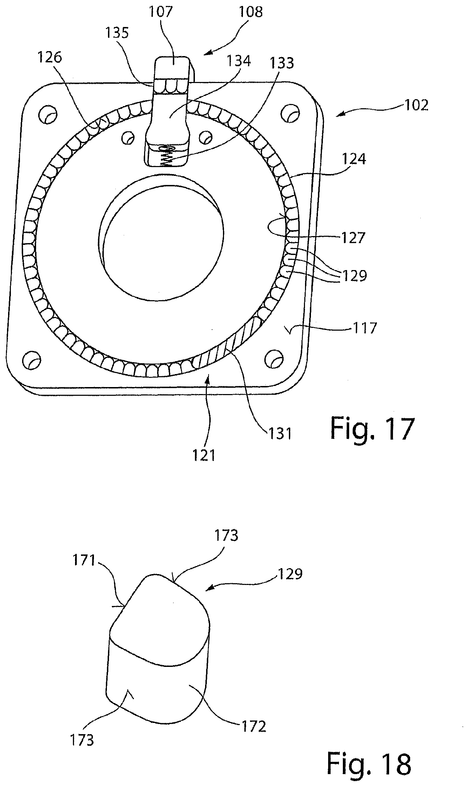

In Figur 17 ist eine schematische Ansicht auf ein erstes Lagerelement 102 gemäß Figur 7 dargestellt. Diese Ausführungsform in Figur 17 weicht in der konkreten Ausgestaltung der Umlaufelemente 129 ab. Das Umlaufelement 129, welches bei der Ausführungsform des Lagerelementes 102 gemäß Figur 17 eingesetzt ist, wird in Figur 18 perspektivisch dargestellt. Bei diesem Umlaufelement 129 handelt es sich um einen von einem Stift oder einer Rolle abgewandelten Körper mit einer Längsachse, welche eine äußere Führungsfläche 171 aufweist, die geradlinig oder leicht gekrümmt ausgebildet sein kann. Im Falle der gekrümmten Ausführungsform kann diese Krümmung an die Krümmung einer äußeren Kammerwand 126 angepasst sein, so dass eine Führung entlang der Kammer 126 möglich ist. Der Führungsfläche 171 gegenüberliegend ist bevorzugt eine gerundete Gleitfläche 172 vorgesehen, welche sich an der inneren Kammerwand 127 abstützt. Zwischen der Führungsfläche 171 und der Gleitfläche 172 sind Druckflächen 173 vorgesehen. Diese Druckflächen 173 sind parallel zueinander ausgerichtet oder in einem geringfügigen Winkel zueinander angestellt. Im letzteren Fall ist der Winkel auf die Größe des Durchmessers der Kammer 124 angepasst. Dadurch können die zwei zueinander benachbarten Auflageelemente 129 mit deren Druckfläche 173 aneinander anliegen, so dass eine Flächenpressung gegeben ist. Aus dieser Anordnung ergibt sich eine Geometrie des Umlaufelementes 129, welches im Schnitt oder einer Draufsicht einem Brotlaib entspricht.

Bei dem in Figur 18 dargestellten Umlaufelement 129 können die Führungsfläche 171 und die Gleitfläche 172 auch vertauscht sein. Alternativ kann die Führungsfläche 171 auch wie die Gleitfläche 172 gekrümmt ausgebildet sein. Ebenso kann die Gleitfläche 172 anstelle der dargestellten Kontur auch die Kontur der Führungsfläche 171 aufweisen. Die jeweiligen Stirnseiten der Umlaufelement 129 können als Gleitfläche oder als sphärische Fläche ausgebildet sein, um eine geringe Reibung an dem Kammerboden 125 zu erzielen.

## Patentansprüche

1. Schwenkverriegelungsvorrichtung von zwei zu einer gemeinsamen Achse ausgerichteten Lagerelementen (102, 103), bei welcher eines oder beide Lagerelemente (102, 103) um eine gemeinsame Schwenkachse (22) schwenkbar sind,
- mit einem ersten Lagerelement (102), welches eine Durchbrechung (104) aufweist,
- mit einem zweiten Lagerelement (103), welches eine Durchbrechung (106) aufweist, wobei das erste und zweite Lagerelement (102, 103) mit den Durchbrechungen (104, 106) fluchtend zueinander ausgerichtet sind, die Schwenkverriegelungsvorrichtung ist **dadurch gekennzeichnet, dass** sie weiter ausgestattet ist:
- mit einer an dem ersten Lagerelement (102) vorgesehenen Kammer (124), die eine Umlaufbahn für Umlaufelemente (129) aufweist und zum zweiten Lagerelement (103) offen ist und durch eine zur Kammer (124) weisende Anschlussfläche (118) am zweiten Lagerelement (103) geschlossen ist,
- mit einer Vielzahl von in der Kammer (124) angeordneten Umlaufelementen (129),
- mit einem an dem zweiten Lagerelement (103) anordenbaren Mitnehmer (121), der in die umlaufende Kammer (124) eingreift und zwischen Umlaufelementen (129) positioniert ist und bei einer Schwenkbewegung des zweiten Lagerelementes (103) zum ersten Lagerelement (102) die Umlaufelemente (129) in der Kammer (124) entlang der Umlaufbahn verschiebt, und
- mit einem an dem ersten Lagerelement (102) angeordneten Verriegelungselement (107), welches in einer Entriegelungsposition (109) die Umlaufbahn für die Umlaufelemente (129) in der Kammer (124) freigibt und in einer Verriegelungsposition (108) des Verriegelungselements (107) eine Verschiebebewegung der Umlaufelemente (129) entlang der Umlaufbahn der Kammer (124) sperrt.

2. Schwenkverriegelungsvorrichtung nach Anspruch 1, **dadurch gekennzeichnet, dass** die Kammer (124) kreisförmig oder kreisbogenförmig ausgebildet ist und vorzugsweise die Kammer (124) eine Tiefe aufweist, welche der Höhe eines Umlaufelementes (129) entspricht.

3. Schwenkverriegelungsvorrichtung nach Anspruch 1 oder 2, **dadurch gekennzeichnet, dass** die Kammer (124) vor und nach dem die Kammer (124) sperrenden Verriegelungselement (107) einen Sperrbereich (141) mit einer Breite aufweist, in dem die Umlaufelemente (129) einspurig verschiebbar geführt sind und vorzugsweise der Sperrbereich (141) der Kammer (124) vor und nach dem Verriegelungselement (107) wenigstens eine Länge von wenigstens einem Durchmesser des Umlaufelements (129) umfasst.

4. Schwenkverriegelungsvorrichtung nach einem der Ansprüche 1 oder 2, **dadurch gekennzeichnet, dass** die Kammer (124) über den gesamten Umfang der Umlaufbahn eine konstante Breite umfasst, so dass die Umlaufelemente (129) einspurig geführt sind.

5. Schwenkverriegelungsvorrichtung nach Anspruch 3, **dadurch gekennzeichnet, dass** die Kammer (124) dem Verriegelungselement (107) gegenüberliegend einen Staubereich (143) aufweist, dessen Breite dem zwei- oder mehrfachen Durchmesser der Umlaufelemente (129) entspricht und zwei- oder mehrspurig ausgebildet ist und vorzugsweise zwischen dem Staubereich (143) und dem Sperrbereich (141) ein Verjüngungsbereich (142) ausgebildet ist, in welchem die zwei- oder mehrspurig angeordneten Umlaufelemente (129) auf eine einspurige Anordnung in dem Sperrbereich (143) überführbar sind.

6. Schwenkverriegelungsvorrichtung nach einem der vorhergehenden Ansprüche, **dadurch gekennzeichnet, dass** der Mitnehmer (121) in der Kammer (124) verfahrbar geführt ist, und vorzugsweise radial ausgerichtete Führungsflächen aufweist, welche entlang einer inneren und äußeren Kammerwand (126, 127) verschiebbar geführt sind.

7. Schwenkverriegelungsvorrichtung nach einem Anspruch 5, **dadurch gekennzeichnet, dass** der Mitnehmer (121) bei einer Kammer (124) mit einem Staubereich (143) eine Verfahrstrecke aufweist, welche durch einen Winkelbereich begrenzt ist, entlang der sich der Staubereich (143) erstreckt.

8. Schwenkverriegelungsvorrichtung nach einem der Ansprüche 1 bis 6, **dadurch gekennzeichnet, dass** der Mitnehmer (121) bei einer Kammer (124) mit einer konstanten Breite einer Umlaufbahn über den gesamten Umfang eine Verfahrstrecke aufweist, welche um das Maß des in der Kammer positionierten Abschnitts des Verriegelungselementes (107) und die Länge des Mitnehmers reduziert ist.

9. Schwenkverriegelungsvorrichtung nach einem der vorhergehenden Ansprüche, **dadurch gekennzeichnet, dass** die Umlaufelemente (129) als Kugeln, mehreckige oder unrunde Stifte, Rollen, Stifte, Bogensegmente, Körner oder Sand ausgebildet sind, wobei vorzugsweise die Stifte oder Rollen stehend in der Kammer (124) geführt sind, sodass die Mantelflächen oder Druckfläche (173) der Stifte oder Rollen aneinander anliegen und die Führungsflächen (171) und/oder Gleitflächen (172) der Umlaufelemente (129) sich an der Kammerwand (124, 125) abstützen.

10. Schwenkverriegelungsvorrichtung nach einem der vorhergehenden Ansprüche, **dadurch gekennzeichnet, dass** das Verriegelungselement (107) in einer inaktiven Position (110) mit einem Kraftspeicherelement (133) in einer Verriegelungsposition (108) angeordnet ist und die Umlaufbahn in der Kammer (124) sperrt und vorzugsweise das Verriegelungselement (107) ein Steuerelement (112), insbesondere eine Betätigungsfläche oder Steuerkante zum aktiven Überführen in eine Entriegelungsposition (109), aufweist.

11. Schwenkverriegelungsvorrichtung nach einem der vorhergehenden Ansprüche, **dadurch gekennzeichnet, dass** das Verriegelungselement (107) durch eine Verschiebebewegung, insbesondere radial zum Verlauf der Umlaufbahn der Kammer (124) oder durch eine Drehbewegung, aktivierbar ist.

12. Schwenkverriegelungsvorrichtung nach einem der vorhergehenden Ansprüche, **dadurch gekennzeichnet, dass** der Mitnehmer (121) lösbar mit dem zweiten Lagerelement (103) gekoppelt ist.

13. Schwenkverriegelungsvorrichtung nach einem der vorhergehenden Ansprüche, **dadurch gekennzeichnet, dass** das erste und zweite Lagerelement (102, 103) jeweils einen Flanschabschnitt (114, 115) zur Montage jeweils an einem Bauteil aufweist.

14. Hebevorrichtung zum Heben und Senken von Lasten, Fahrzeugen oder dergleichen mit einem auf und ab bewegbaren Träger (17), an dem zumindest ein Tragarm (21) um eine Schwenkachse (22) an dem Träger (17) schwenkbar gelagert ist, **dadurch gekennzeichnet, dass** zwischen dem Träger (17) und dem Tragarm (21) zumindest eine Schwenkverriegelungsvorrichtung (101) nach einem der Ansprüche 1 bis 13 angeordnet ist.

15. Hebevorrichtung nach Anspruch 14, **dadurch gekennzeichnet, dass** an dem Träger (17) ein zum Träger (17) in der Lage veränderbares Bedienelement (161) vorgesehen ist, durch welche das Verriegelungselement (107) der Schwenkverriegelungsvorrichtung (101) in eine Entriegelungsposition (109) überführbar und vorzugsweise das Bedienelement (161) manuell oder beim Absenken des Trägers (17) auf dem Boden aktivierbar ist.

## Claims

1. Pivot locking device of two bearing elements (102, 103) aligned along a common axis, in which one or both bearing elements (102, 103) are pivotable about a common pivot axis (22),
- with a first bearing element (102) which comprises a perforation (104),
- with a second bearing element (103) which comprises a perforation (106), wherein the first and second bearing element (102, 103) are oriented with the perforations (104, 106) in alignment to one another, the pivot locking device is **characterized in that** it is further equipped,
- with a chamber (124) provided on the first bearing element (102), which chamber comprises a circulatory path for circulatory elements (129) and is open to the second bearing element (103) and is closed, by a connecting surface (118) facing to the chamber (124), at the second bearing element (103),
- with a plurality of circulatory elements (129) arranged in the chamber (124),
- with an catch (121), arrangeable on the second bearing element (103), which catch engages into the circulating chamber (124) and is positioned between circulatory elements (129) and, in a pivot movement of the second bearing element (103) to the first bearing element (102), displaces the circulatory elements (129) in the chamber (124) along the circulatory path, and
- with a locking element (107) arranged on the first bearing element (102), which locking element (107), in an unlocking position (109), unblocks the circulatory path for the circulatory elements (129) in the chamber (124) and, in a locking position (108) of the locking element (107), blocks a displacement movement of the circulatory elements (129) along the circulatory path of the chamber (124) .

2. Pivot locking device according to claim 1, **characterized in that** the chamber (124) is configured in the shape of a circle or a circular arc, and preferably the chamber (124) has a depth which corresponds to the height of a circulatory element (129).

3. Pivot locking device according to claim 1 or 2, **characterized in that** the chamber (124) comprises a blocking region (141) with a width, in front of and behind the locking element (107) blocking the chamber (124), in which blocking region the circulatory elements (129) are displaceably guided in a single-tracked manner, and preferably the blocking region (141) of the chamber (124), in front of and behind the locking element (107), includes at least a length of at least one diameter of the circulatory element (129).

4. Pivot locking device according to one of claims 1 or 2, **characterized in that** the chamber (124) has a constant width over the entire circumference of the circulatory path, so that the circulatory elements (129) are guided in a single-tracked manner.

5. Pivot locking device according to one to claim 3, **characterized in that** the chamber (124) comprises a storing region (143) opposite the locking element (107), the width of which region corresponds to two or multiple times the diameter of the circulatory elements (129) and is configured in a two- or multiple-tracked manner, and preferablya tapering region (142) is configured between the storing region (143) and the blocking region (141), in which tapering region the circulatory elements (129), arranged in a two- or multiple-tracked manner, are transferrable to a single-tracked arrangement in the blocking region (143).

6. Pivot locking device according to one of the preceding claims, **characterized in that** the catch (121) is movably guided in the chamber (124) and comprises preferably radially oriented guiding surfaces, which are displaceably guided along an internal and external chamber wall (126, 127).

7. Pivot locking device according to claim 5, **characterized in that** the catch (121) comprises a movement path in a chamber (124) with a storing region (143), which path is delimited by an angular region, along which the storing region (143) extends.

8. Pivot locking device according to one of claims 1 to 6, **characterized in that** the catch (121), in a chamber (124) with a constant width of a circulatory path, has a movement path, over the entire circumference, which path is reduced by the dimension of the portion of the locking element (107) positioned in the chamber and the length of the catch.

9. Pivot locking device according to one of the preceding claims, **characterized in that** the circulatory elements (129) are configured as balls, polygonal or non-round pins, rollers, pins, arc segments, grains or sand, wherein the pins or rollers are preferably guided upright in the chamber (124) so that the external surfaces or pressure surface (173) of the pins or rollers rest on one another, and the guiding surfaces (171) and/or sliding surfaces (172) of the circulatory elements (129) are supported on the chamber wall (124, 125).

10. Pivot locking device according to one of the preceding claims, **characterized in that** the locking element (107) is arranged, in an inactive position (110), with a power-storing element (133) in a locking position (108) and blocks the circulatory path in the chamber (124), and preferably the locking element (107) comprises a control element (112), in particular an actuation surface or control edge for active transferal into an unlocking position (109).

11. Pivot locking device according to one of the preceding claims, **characterized in that** the locking element (107) is activatable by a displacement movement, in particular radially to the course of the circulatory path of the chamber (124), or by a rotational movement.

12. Pivot locking device according to one of the preceding claims, **characterized in that** the catch (121) is detachably coupled with the second bearing element (103).

13. Pivot locking device according to one of the preceding claims, **characterized in that** the first and second bearing element (102, 103) respectively comprise a flange portion (114, 115) for mounting, respectively, on a component.

14. Lifting device for lifting and lowering loads, vehicles or the like, with an upwardly and downwardly movable carrier (17), on which at least one support arm (21) is pivotably mounted about a pivot axis (22) on the carrier (17), **characterized in that** at least one pivot locking device (101), according to one of claims 1 to 13, is arranged between the carrier (17) and the support arm (21).

15. Lifting device according to claim 14, **characterized in that** an operating element (161), alterable in position to the carrier (17), is provided on the carrier (17), by means of which element the locking element (107) of the pivot locking device (101) is transferrable into an unlocking position (109), and the operating element (161) is preferably activatable, manually or in the lowering of the carrier (17) onto the floor.

## Revendications

1. Dispositif de verrouillage par pivotement de deux éléments de palier (102, 103) alignés sur un axe commun, dans lequel un ou les deux éléments de palier (102, 103) peuvent pivoter autour d'un axe de pivotement commun (22), pourvu
- d'un premier élément de palier (102) qui présente une ouverture (104),
- d'un deuxième élément de palier (103) qui présente une ouverture (106), le premier et le deuxième élément de palier (102, 103) étant alignés l'un sur l'autre de manière à faire coïncider lesdites ouvertures (104, 106), **caractérisé en ce que** ledit dispositif de verrouillage par pivotement est en outre équipé :
- d'une chambre (124) prévue dans le premier élément de palier (102), laquelle présente un chemin de roulement pour des éléments de roulement (129) et laquelle est ouverte vers le deuxième élément de palier (103) et est fermée par une surface de raccordement (118) qui est située sur le deuxième élément de palier (103) et est tournée vers ladite chambre (124),
- d'une pluralité d'éléments de roulement (129) disposés dans la chambre (124),
- d'un entraîneur (121) pouvant être positionné sur le deuxième élément de palier (103), lequel engrène dans la chambre (124) circonférentielle et est positionné entre des éléments de roulement (129) et qui, lorsque le deuxième élément de palier (103) effectue un mouvement de pivotement par rapport au premier élément de palier (102), fait se déplacer lesdits éléments de roulement (129) contenus dans la chambre (124) le long du chemin de roulement, et
- d'un élément de verrouillage (107) disposé sur le premier élément de palier (102), lequel libère, dans une position de déverrouillage (109), le chemin de roulement pour les éléments de roulement (129) contenus dans la chambre (124) et qui, lorsque ledit élément de verrouillage (107) se trouve dans une position de verrouillage (108), bloque un mouvement de déplacement des éléments de roulement (129) le long du chemin de roulement de la chambre (124).

2. Dispositif de verrouillage par pivotement selon la revendication 1, **caractérisé en ce que** la chambre (124) est réalisée de forme circulaire ou en arc de cercle et **en ce que** la chambre (124) présente de préférence une profondeur qui correspond à la hauteur d'un élément de roulement (129).

3. Dispositif de verrouillage par pivotement selon la revendication 1 ou 2, **caractérisé en ce que** la chambre (124) présente, avant et après l'élément de verrouillage (107) permettant de bloquer ladite chambre (124), une zone de blocage (141) d'une largeur donnée dans laquelle les éléments de roulement (129) sont déplacés de manière guidée sur une seule rangée et **en ce que** la zone de blocage (141) de la chambre (124) comprend de préférence, avant et après l'élément de verrouillage (107), au moins une longueur correspondant à au moins un diamètre de l'élément de roulement (129).

4. Dispositif de verrouillage par pivotement selon l'une quelconque des revendications 1 ou 2, **caractérisé en ce que** la chambre (124) comprend une largeur constante sur toute la circonférence du chemin de roulement de sorte que les éléments de roulement (129) sont guidés sur une seule rangée.

5. Dispositif de verrouillage par pivotement selon la revendication 3, **caractérisé en ce que** la chambre (124) présente, à l'opposé de l'élément de verrouillage (107), une zone de retenue (143) dont la largeur fait deux fois ou plusieurs fois le diamètre des éléments de roulement (129) et qui est réalisée à deux ou à plusieurs rangées, et **en ce que** de préférence entre la zone de retenue (143) et la zone de blocage (141) est formée une zone d'étranglement (142) dans laquelle les éléments de roulement (129) disposés sur deux ou plusieurs rangées passent à une disposition en une seule rangée lorsqu'ils se trouvent dans la zone de blocage (143).

6. Dispositif de verrouillage par pivotement selon l'une quelconque des revendications précédentes, **caractérisé en ce que** l'entraîneur (121) peut être déplacé dans la chambre (124) de manière guidée et présente de préférence des surfaces de guidage orientées de manière radiale qui peuvent être déplacées de manière guidée le long respectivement d'une paroi de chambre intérieure et extérieure (126, 127).

7. Dispositif de verrouillage par pivotement selon la revendication 5, **caractérisé en ce que** l'entraîneur (121) présente, dans le cas d'une chambre (124) pourvue d'une zone de retenue (143), une distance de déplacement qui est limitée par une plage angulaire et le long de laquelle s'étend la zone de retenue (143).

8. Dispositif de verrouillage par pivotement selon l'une quelconque des revendications 1 à 6, **caractérisé en ce que** l'entraîneur (121) présente, dans le cas d'une chambre (124) pourvue d'un chemin de roulement dont la largeur est constante sur toute la circonférence, une distance de déplacement qui se voit réduite d'une grandeur correspondant à la partie de l'élément de verrouillage (107) positionnée dans la chambre et à la longueur de l'entraîneur.

9. Dispositif de verrouillage par pivotement selon l'une quelconque des revendications précédentes, **caractérisé en ce que** les éléments de roulement (129) sont réalisés sous forme de sphères, de goupilles polygonales ou ovalisées, de rouleaux, de goupilles, de segments d'arc, de grains ou de sable, les goupilles ou les rouleaux étant guidés de préférence en position debout dans la chambre (124) de sorte que les surfaces latérales ou les surfaces de pression (173) des goupilles ou des rouleaux reposent les unes contre les autres et que les surfaces de guidage (171) et/ou les surfaces de glissement (172) des éléments de roulement (129) s'appuient contre la paroi de chambre (124, 125).

10. Dispositif de verrouillage par pivotement selon l'une quelconque des revendications précédentes, **caractérisé en ce que** l'élément de verrouillage (107), lorsqu'il se trouve dans une position inactive (110), est disposé dans une position de verrouillage (108) grâce à un élément accumulateur d'énergie (133) et bloque ainsi le chemin de roulement situé dans la chambre (124) et **en ce que** l'élément de verrouillage (107) présente de préférence un élément de commande (112), en particulier une surface d'actionnement ou arête de commande, en vue de le faire passer activement dans une position de déverrouillage (109).

11. Dispositif de verrouillage par pivotement selon l'une quelconque des revendications précédentes, **caractérisé en ce que** l'élément de verrouillage (107) peut être activé par un mouvement de déplacement, effectué en particulier de manière radiale par rapport au tracé du chemin de roulement de la chambre (124), ou par un mouvement de rotation.

12. Dispositif de verrouillage par pivotement selon l'une quelconque des revendications précédentes, **caractérisé en ce que** l'entraîneur (121) est couplé de manière amovible au deuxième élément de palier (103).

13. Dispositif de verrouillage par pivotement selon l'une quelconque des revendications précédentes, **caractérisé en ce que** le premier et le deuxième élément de palier (102, 103) présentent respectivement une partie de bride (114, 115) en vue d'être montés respectivement à un élément de machine.

14. Dispositif de levage destiné à soulever et à abaisser des charges, des véhicules ou des objets similaires, équipé d'un support (17) pouvant monter et descendre sur lequel est logé un bras porteur (21) de manière à pouvoir pivoter sur ledit support (17) autour d'un axe de pivotement (22), **caractérisé en ce qu'**au moins un dispositif de verrouillage par pivotement (101) selon l'une quelconque des revendications 1 à 13 est disposé entre le support (17) et le bras porteur (21).

15. Dispositif de levage selon la revendication 14, **caractérisé en ce que** sur le support (17) est prévu un élément d'actionnement (161) qui peut modifier sa position par rapport au support (17) et grâce auquel l'élément de verrouillage (107) du dispositif de verrouillage par pivotement (101) peut passer dans une position de déverrouillage (109) et **en ce que** de préférence l'élément d'actionnement (161) peut être activé soit manuellement, soit lorsque le support (17) est abaissé à hauteur du sol.
